# EUROPEAN PATENT SPECIFICATION

(11) **EP 2 631 117 B1**
(45) Date of publication and mention of the grant of the patent: **16.12.2015**
(21) Application number: 13156587.1
(22) Date of filing: 25.02.2013
(51) Int. Cl.: B60P 1/44, A61G 3/06

(54) **Lift for a vehicle**
Aufzug für ein Fahrzeug
Appareil de levage pour véhicule

(30) Priority: 27.02.2012 GB 201203351
(43) Date of publication of application: 28.08.2013
(73) Proprietor: Ratcliff Palfinger Ltd, Hertfordshire AL7 1 ET (GB)
(72) Inventor: Fletcher, Steven, Luton, Hertfordshire LU2 8EZ (GB); Agg, David, Hemel Hempstead, Hertfordshire HP3 9NG (GB)
(74) Representative: Boult Wade Tennant

(56) References cited:
- WO-A2-03/059685
- WO-A2-03/104133
- FR-A1- 2 799 166
- US-A- 5 284 414

## Description

The present invention relates to a lift for loading and unloading a vehicle. In particular it concerns a lift made up of two platform leaves, a proximal platform closest to the vehicle and a distal platform furthest from the vehicle. The platform leaves are pivotally connected to one another and can be folded towards each other concertina-fashion when the lift is not in use.

Examples of existing lifts for vehicles can be found in GB 2480489, EP 1079787, EP 0774243, EP 0955029 and US 6,739,824

The preamble of claim 1 is shown in document US 5,284,414. The present invention provides a lift for attachment to a vehicle according claim 1.

In this way, the present invention provides an improved folding mechanism for a lift which provides efficient operation. The mechanism is space efficient and does not reduce the available width of the platform assembly. The arrangement of the fold assembly with proximal, distal and intermediate arms avoids potential trapping points and automatically locks the lift when in the stowed position, thereby reducing vibration and noise.

Preferably, the linkage assembly has a vertical arm, the proximal platform and the vertical arm are connected by a shaft permitting rotation of the proximal platform relative to the vertical arm and wherein a connection plate is freely rotatably mounted on the shaft and is pivotally secured to the proximal arm of the fold assembly.

Preferably, the connection plate further comprises a pin rotatably received in a cup on the vertical arm of the link assembly. The cup may be defined by a bracket mounted on the vertical arm.

In a preferred embodiment, the proximal arm of the fold assembly defines a first slot and the proximal platform comprises a first pin slidable in the first slot. Similarly, the intermediate arm of the fold assembly may define a second slot and the proximal platform comprises a second pin slidable in the second slot.

Preferably, the lift further comprises a fold-actuating linkage pivotally connected to the vertical arm of the linkage assembly and to the proximal platform, wherein the linkage assembly acts on the fold-actuating linkage to cause rotation of the proximal platform relative to the vertical arm.

Preferably, the fold-actuating linkage further comprises spring means, operable to control the rate of movement of the platform assembly as it unfolds, and a hook, and the linkage assembly defines an engagement surface spaced from the hook, wherein in the event of failure of the spring means, the hook and engagement surface come into contact with each other to limit further movement of the platform assembly.

The invention will now be described in detail, by way of example only, with reference to the accompanying drawings in which:
Figure 1 is a side view of a tail lift in accordance with the present invention in the stowed position;
Figure 2 is a side view of the lift of Figure 1 when partially unfolded, between the stowed and loading positions;
Figure 3 is a side view of the lift of Figure 1 with the platform unfolded and in the loading position;
Figure 4 is a side view of Figure 1 with the platform unfolded and lowered to ground level in the deployed position;
Figure 5 is a cross-sectional view of the fail-safe mechanism;
Figure 6 is a perspective view of part of the lift of Figure 2, with certain parts shown transparent for clarity;
Figure 7 is an enlarged view of the connection between the drop arm and the platform assembly, with some components made transparent for clarity;
Figure 7a is detailed view of the connection plate of Figure 7;
Figure 8 is a perspective view of part of the lift in the loading position, with some components shown transparent for clarity;
Figure 9 shows part of the underside of the lift, showing a cable and slider mechanism for moving the bridge plate;
Figure 10 is a side view of the rear of the proximal platform and the bridge plate when these parts are substantially level with one another in the loading position, with other components omitted for clarity;

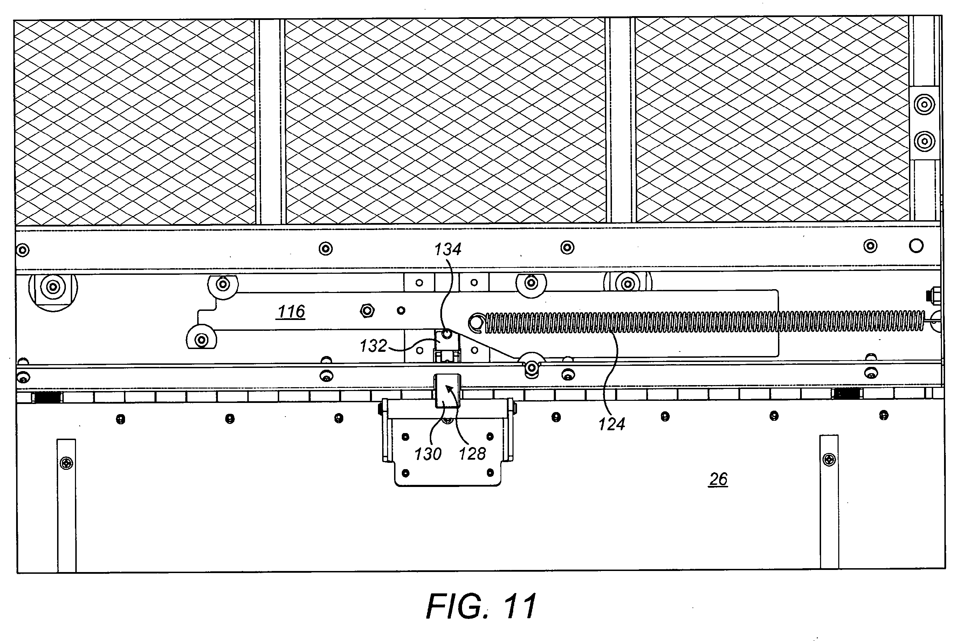

Figure 11 is a view of part of the underside of Figure 10 with the cable omitted for clarity;
Figure 12 is a side view of the rear of the proximal platform and bridge plate as the platform is rotated relative to the bridge plate;

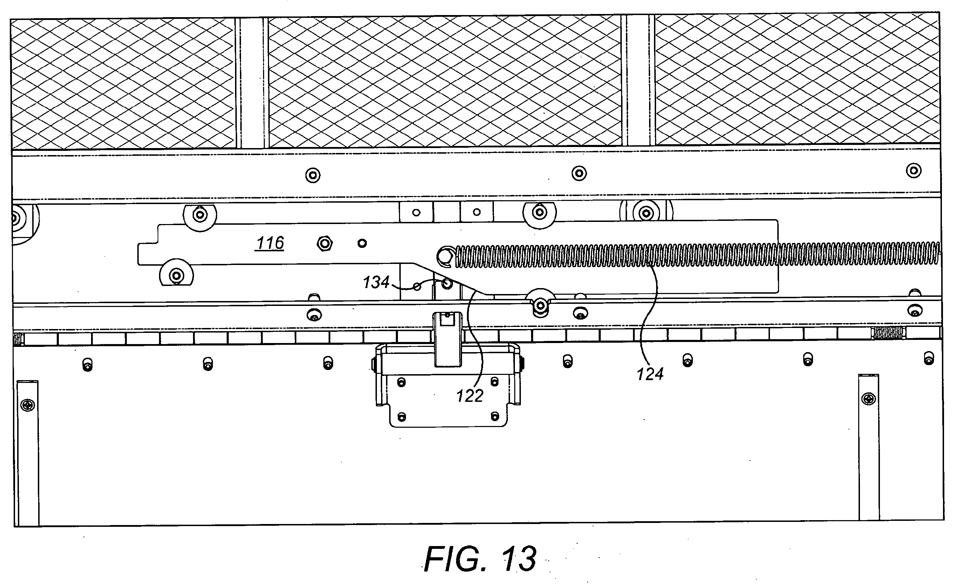

Figure 13 is a view of part of the underside of Figure 12, with the cable omitted for clarity;

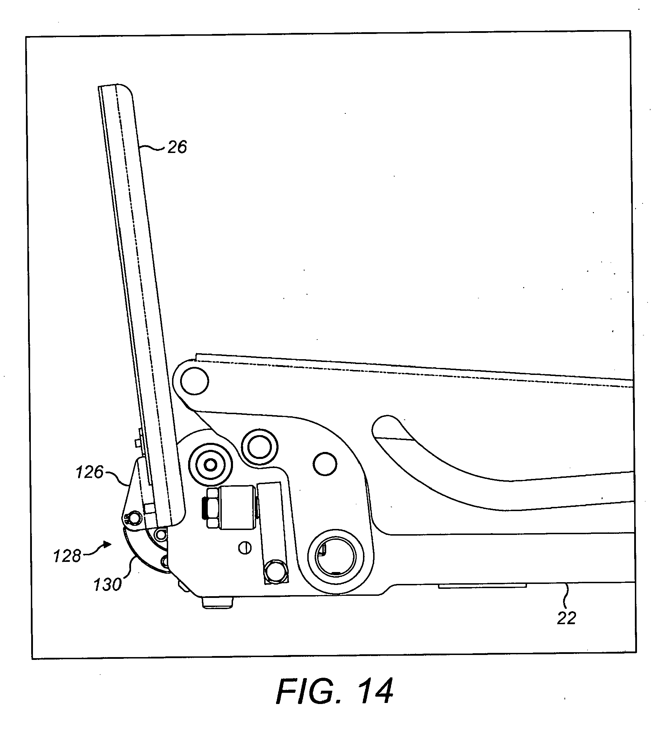

Figure 14 is a side of view of the rear of the proximal platform and the bridge plate, when the bridge plate is substantially perpendicular to the platform; and

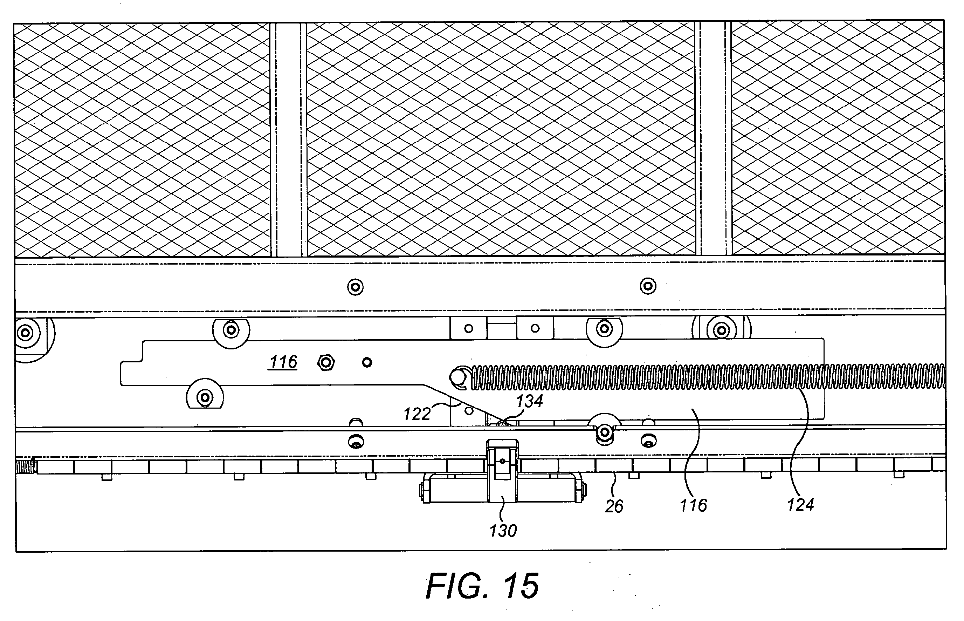

Figure 15 is a view of part of the underside of Figure 14, with the cable omitted for clarity.

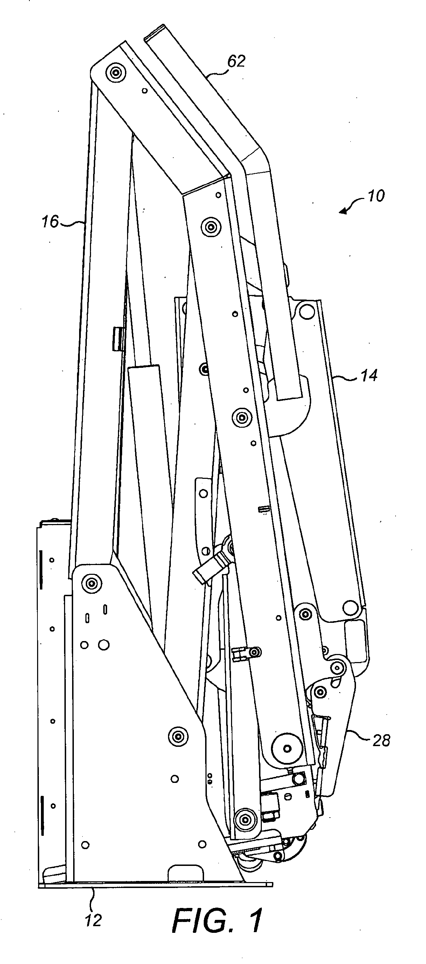

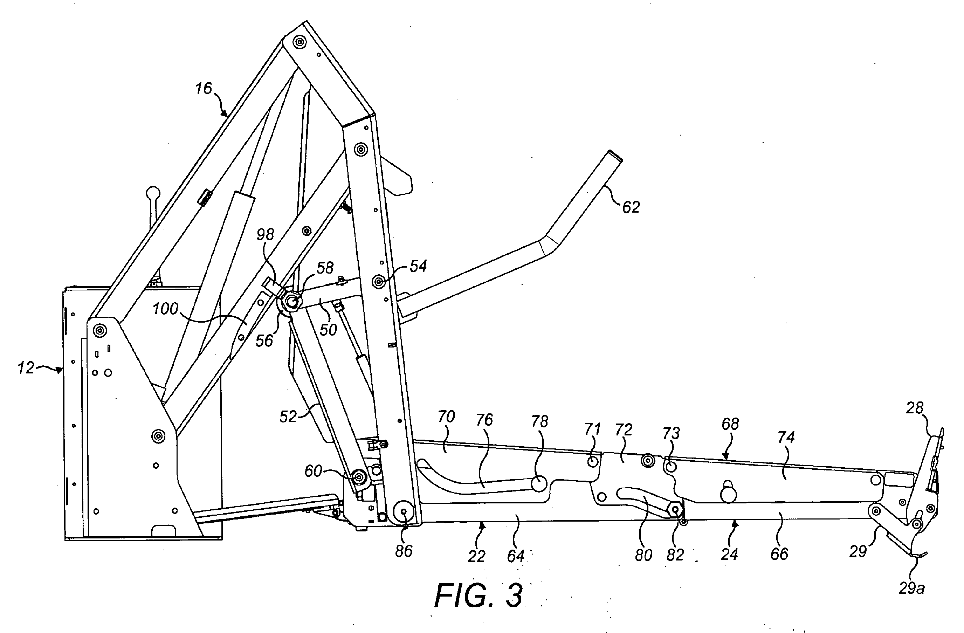

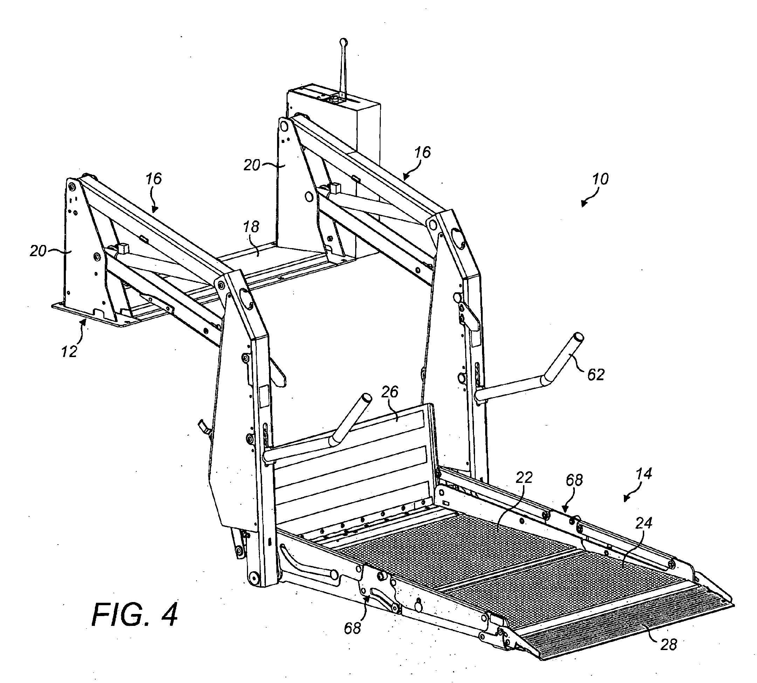

A vehicle lift 10 in accordance with one embodiment of the present invention as best shown in Figures 1-4 includes a base assembly 12 for mounting in a vehicle, a platform assembly 14 for receiving and raising/lowering a load, and a linkage assembly 16 for supporting the platform assembly 14 and moving it relative to the base assembly 12. The platform assembly 14 can be moved between a stowed position in which it is folded and located inside the vehicle (Figure 1), a loading position in which it is unfolded and the platform is at the same level as the floor of the vehicle for transfer of a load between the platform and the vehicle (Figure 3), and a deployed position in which the platform is unfolded and is lowered to ground level for transfer of a load between the platform and the ground (Figure 4).

In the following description, the lift 10 will be described as if it is secured to a vehicle for normal use. The parts of the lift 10 closest to the vehicle will be referred to as the front or proximal parts of the lift 10. The parts of the lift 10 furthest from the vehicle will be referred to as the rear or distal parts of the lift. Similarly, the terms upper and lower, horizontal and vertical will be used with reference to normal use of the lift 10 when installed on a vehicle standing on a flat surface.

The base assembly 12 comprises a support plate 18 securable to the interior floor of a vehicle adjacent to an opening. Typically, this might be a minibus with a door at the rear or the side, where the lift is intended to be used to allow a person in a wheelchair to enter and exit the vehicle. However, the lift 10 may be used for other applications, such as for loading freight. A bracket 20 extends upwardly from each end of the support plate 18 for connection to the linkage assembly 16 as described further below.

The platform assembly 14 comprises a pair of platform leaves. There is a front or proximal platform 22 closest to the vehicle and a rear or distal platform 24 furthest from the vehicle. The proximal end of the proximal platform 22 is pivotally connected to the linkage assembly 16. The distal end of the proximal platform 22 is pivotally connected to the proximal end of the distal platform 24.

A bridge plate 26 is pivotally connected to the proximal end of the proximal platform 22. A loading ramp 28 is pivotally connected to the distal end of the distal platform 24.

The linkage assembly 16 for moving the platform assembly 14 includes a parallelogram linkage 30 for raising and lowering the platform assembly 14 and a fold-actuating linkage 48 for folding and unfolding the platform assembly 14. There is a parallelogram linkage 30 and fold-actuating linkage 48 on each side of the lift 10 as seen in Figure 4 but only one of each linkage is described below.

The parallelogram linkage 30 comprises upper and lower arms 32, 34, a drop arm 36 and the bracket 20 of the base assembly 12. The upper and lower arms 32, 34 are pivotally secured at their proximal ends to the bracket 20 at upper and lower pivot points 38, 40 respectively. The upper and lower arms 32, 34 are pivotally secured at their distal ends to the drop arm 36 at upper and lower pivot points 42 and 44 respectively.

A linear actuator such as a hydraulic cylinder 46 extends diagonally across the parallelogram linkage from proximal lower pivot point 40 to distal upper pivot point 42. Movement of the actuator 46 moves the drop arm 36 in order to raise and lower the platform assembly 14.

The fold-actuating linkage 48 is located between the parallelogram linkage 30 and the drop arm 36 and causes the proximal and distal platforms 22, 24 to unfold and fold as described further below. The fold-actuating linkage 48 comprises an upper arm 50 and a lower arm 52. One end of the upper arm 50 is pivotally connected to the drop arm 36 at a pivot point 54. The other end of the upper arm 50 is pivotally connected to the upper end of the lower arm 52 and to a roller 56 at a pivot point 58. The lower end of lower arm 52 is pivotally connected to the proximal end of the proximal platform 22 at a pivot point 60. A side guard rail 62 may be provided, connected to the drop arm 36 at the pivot point 54.

Side walls 64 extend from each side of the proximal platform 22, perpendicular to the load-bearing surface of the platform. Similarly, side walls 66 extend from each side of the distal platform 24. These prevent a load falling off the edges of the platform assembly 14. A folding assembly 68 is mounted on the side walls 64, 66 to effect folding and unfolding of the proximal and distal platforms 22, 24. The fold assembly 68 comprises a proximal arm 70, an intermediate arm 72 and a distal arm 74.

The proximal arm 70 defines a first arcuate slot 76 which receives a pin 78 secured to the side wall 64 of the proximal platform 22 roughly halfway between its proximal and distal ends. The proximal arm 70 is pivotally connected at its distal end to the intermediate arm 72 at a pivot point 71. The intermediate arm 72 defines a second arcuate slot 80 which receives a second pin 82 secured to the distal end of the proximal platform 22, just proximal of the hinge 84 between the proximal and distal platforms 22, 24.

The distal arm 74 is secured to the side wall 66 of the distal platform 24 and at its proximal end is pivotally secured to the intermediate arm 72 at a pivot point 73.

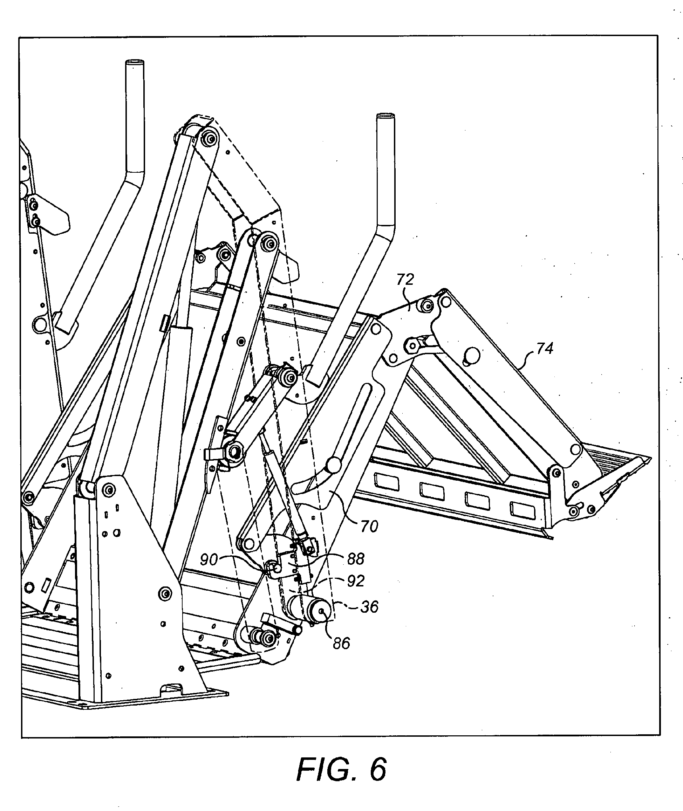

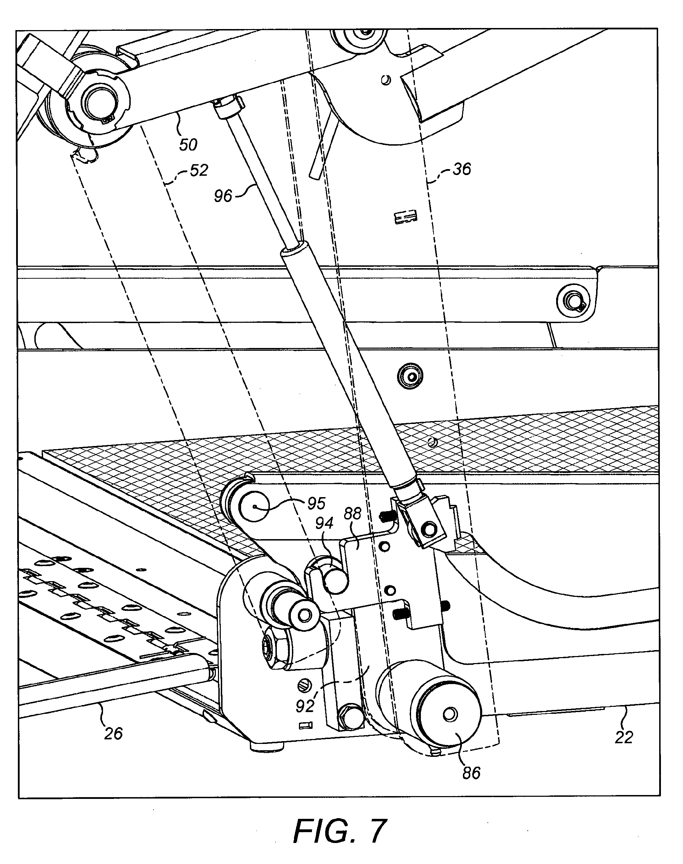

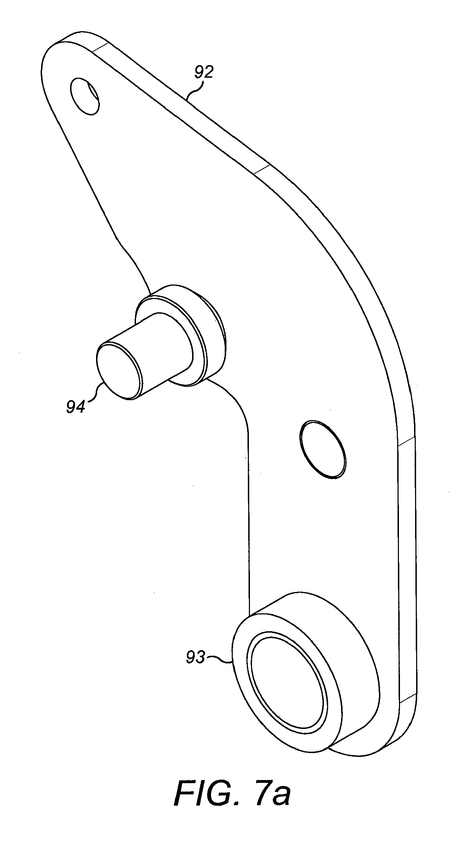

As best seen in Figures 6 and 7, the proximal platform 22 is pivotally secured to the lower end of the drop arm 36 by a shaft 86. A bracket 88 is secured to the drop arm 36 and defines a U-shaped cup 90. A connection plate 92, generally in the form of an inverted L-shape, is located between the side wall 64 of the proximal platform 22 and the drop arm 36. The connection plate 92 is shown in Figure 7a. The lower end defines a boss 93 enabling the connection plate 92 to be mounted in a freely rotatable manner on the shaft 86. A pin 94 integral with connection plate 92 is received in the U-shaped cup 90 of the bracket 88. The upper end of the connection plate 92, remote from boss 93, is pivotally secured at a pivot point 95 to the proximal end of the proximal arm 70 of the fold assembly 68.

When the lift 10 is first constructed, the platform assembly can be assembled with the fold assembly 68 and the connection plate 92. This sub-assembly can then be positioned between the two drop arms 36 on each side of the lift, with the weight carried by the pins 94 from the connection plates on each side of the platform assembly being received in the cups 90 on the drop arms 36. The platform sub-assembly is therefore supported, allowing the shaft 86 to be fitted subsequently. This simplifies the construction of the whole lift 10.

In the stowed position as in Figure 1, the actuator 46 is fully extended. The proximal and distal platforms 22, 24 are substantially vertical, folded up with their undersides facing and adjacent one another. They are located between the pair of brackets 20 and linkage assemblies 16 on each side of the lift 10. The bridge plate 26 is substantially horizontal adjacent to the base plate 18. The loading ramp 28 is substantially vertical, suspended from the distal end of the distal platform 24. The side guard rail 62 is substantially vertical, adjacent to the drop arm 36.

A profile piece 104 may project from the drop arm 36, which engages with a roller 106 mounted on the intermediate arm 72 of the folding assembly 68 when the platform is in the stowed position. This provides positive indication that the platform assembly is fully and correctly stowed.

In the loading position as in Figure 3, the actuator 46 is partially extended. This in turn partially extends the linkage assembly 16 causing the proximal and distal platforms 22, 24 to be unfolded and located adjacent one another in a substantially horizontal position level with the interior floor of the vehicle and with their undersides facing downwardly. The bridge plate 26 is substantially horizontal and bridges the gap between the vehicle floor and the platform assembly 14. The loading ramp 28 projects substantially vertically upwards from the distal platform 24, in order to stop a load rolling distally off the end of the distal platform 24. The side guard rail 62 unfolds from the drop arm 36 and extends distally. It functions to prevent sideways tipping of a load on the platform assembly 14 and can be used as a handhold for a person sitting in a wheelchair on the platform assembly 14.

In the fully deployed position as in Figure 4, the actuator 46 is fully retracted, lowering the drop arm 36 so that the proximal and distal platforms 22, 24 remain substantially horizontal but are lowered to ground level. The bridge plate 26 is substantially vertical to prevent a load rolling proximally off the platform assembly 14. The loading ramp 28 is angled downwardly from the distal end of the distal platform 24 to allow a load to roll smoothly on and off the platform assembly 14. The side guard rail 62 remains in the same position as in the loading position. Guard plates are also shown, covering the fold-actuating linkage 48, for safety. These are present in practice but are omitted from the other figures for clarity.

Operation of the fold-actuating linkage 48 and movement of the platform leaves 22, 24, and the mechanism for moving the bridge plate 26, will now be described in more detail.

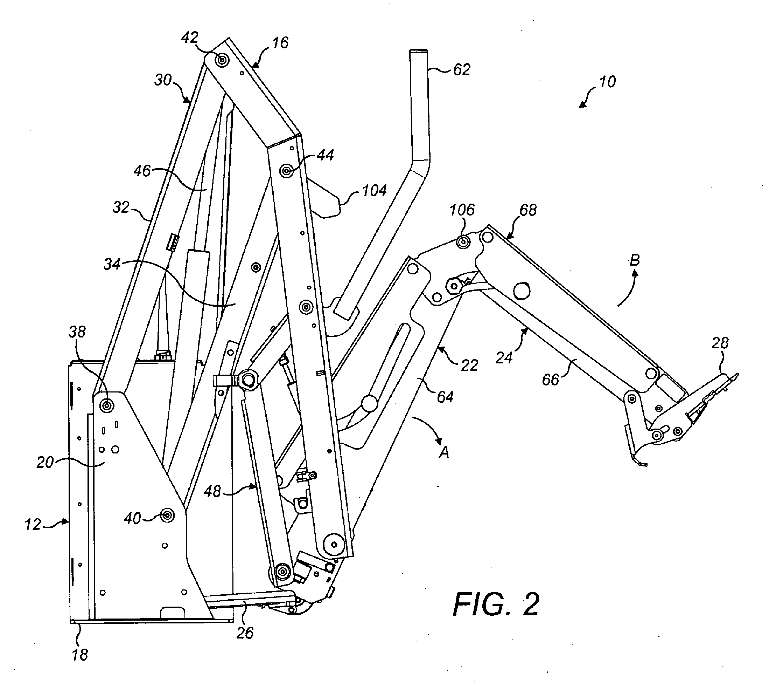

To move from the stowed position to the loading position, the hydraulic cylinder 46 is retracted, causing the drop arm 36 to move the platform assembly 14 distally, away from the base assembly 12. As this happens, the fold-actuating linkage 48 opens away from the drop arm 36, initiating movement of the platform assembly 14, which starts to unfold, aided by the action of gravity. In particular, the lower arm 52 of the fold-actuating linkage 48 pulls upwardly on pivot point 60, causing the proximal platform 22 to rotate about the shaft 86 from a substantially vertical position towards the horizontal, i.e. clockwise (arrow A) in Figure 2. Due to the interconnections between the drop arm 36, the connection plate 92 and the elements of the folding assembly 68, the first pin 78 travels distally along the first slot 76 in the proximal pivot arm 70 and the second pin 82 travels distally along the second slot 80 in the intermediate pivot arm 72. This in turn causes the distal platform 24 to rotate about the hinge 84 in the opposite direction to the proximal platform 22, i.e. anticlockwise (arrow B) in Figure 2. This brings the proximal and distal platforms 22, 24 into an adjacent horizontal relationship in the loading position, level with the floor of the vehicle. The unfolding action of the platform assembly 14 is controlled by a gas spring 96 to ensure smooth and gradual movement. The gas spring 96 is connected between the upper arm 50 of the fold-actuating linkage 48 and the drop arm 36.

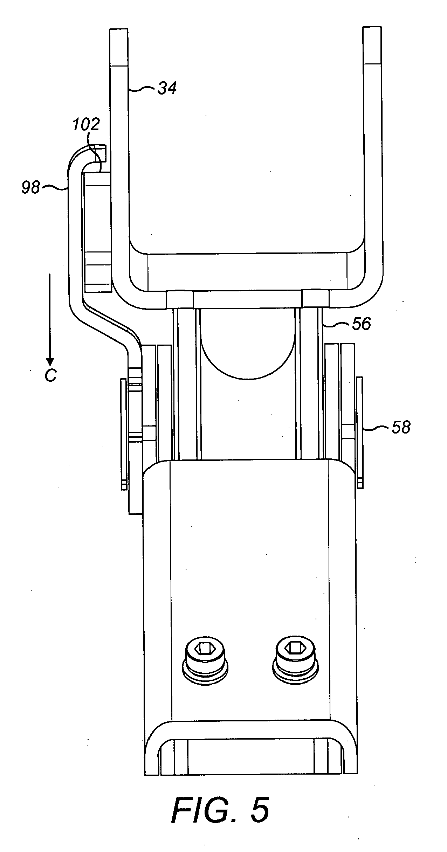

However, if the gas spring 96 were to fail, the platform assembly 14 could drop suddenly under gravity, in a potentially hazardous manner. Therefore, a fail-safe mechanism is preferably provided in the form of a hook 98 and engagement bar 100. The hook 98 is attached to the pivot point 58 of the fold-actuating linkage 48 and extends towards the lower arm 34 of the parallelogram linkage 30. The engagement bar 100 is secured to the lower arm 34. As seen in the cross-section of Figure 5, the hook 98 is normally spaced from the engagement bar 100. However, if the gas spring 96 fails, the weight of the platform assembly 14 causes the fold-actuating linkage 48 to move away from the lower arm 34 as shown by arrow C. This brings the hook 98 into contact with an engagement surface 102 of the engagement bar 100. This prevents further movement of the fold-actuating linkage 48, and thus of the platform assembly 14, downwardly and away from the parallelogram linkage 30.

During the unfolding process as the lift 10 moves between the stowed and loading positions, the hook 98 travels over the engagement bar 100. Once the platform assembly 14 reaches the loading position, the hook 98 moves beyond the end of the engagement bar 100 as in Figure 3. Thus, the roller 56 is able to come out of contact with the lower arm 34 of the parallelogram linkage 30, and further retraction of the hydraulic cylinder 46 is able to lower the drop arm 36 and the platform assembly 14 to ground level.

In order to move the loading ramp 28, a substantially L-shaped strut 29 with a curved guide shoe 29a is pivotally connected to the distal platform 24 and to the loading ramp 28. A spring (not visible in the figures) biases the strut 29 away from the distal platform 24. When the lift 10 is lowered to ground level in the deployed position, the guide shoe 29a contacts the ground and causes the L-shaped strut 29 to rotate towards the distal platform 24 against the action of the spring. This in turn rotates the loading ramp 28 clockwise relative to the distal platform 24, bringing it into the sloped position of Figure 4.

In order to move from the deployed position back to the loading and stowed positions, the hydraulic cylinder 46 is gradually extended, raising the drop arm 36 and the platform assembly 14 from ground level up to the loading position. The roller 56 again comes into contact with the lower arm 34 of the parallelogram linkage 30. Further extension of the hydraulic cylinder 46 brings the drop arm 36 back towards the base assembly 12. The lower arm 34 of the parallelogram linkage 30 pushes against the roller 56, which can roll and therefore travel along the lower arm 34. The lower arm 52 of the fold-actuating linkage 48 is pushed downwardly. This exerts a turning moment on the proximal platform 22 about shaft 86, causing the proximal platform 22 to rotate from the horizontal back towards the vertical, anticlockwise as in the figures.

Once again, the interconnections between the drop arm 36, connection plate 92 and the elements of the fold assembly 68 act to slide the first and second pins 78 and 82 back along the respective first and second slots 76 and 80, rotating the distal platform 22 clockwise about the hinge 84 so that the undersides of the proximal and distal platforms 22, 24 approach one another. Thus, the platform assembly 14 folds up and retracts towards the base assembly 12 to return to the stowed position.

As the lift 10 moves between the stowed and deployed positions, the bridge plate 26 is moved between horizontal and vertical positions preferably by a cable and slider mechanism 110.

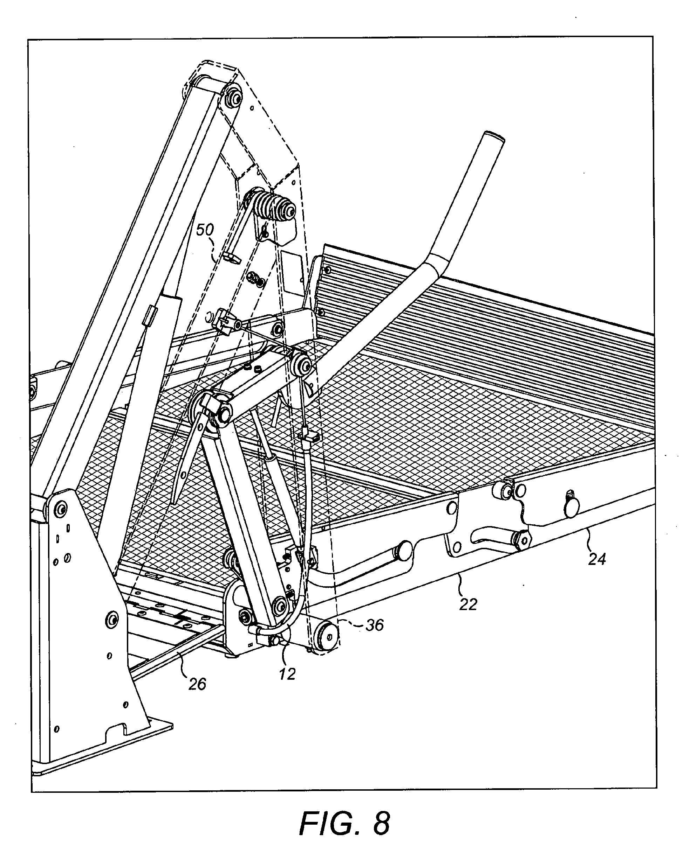

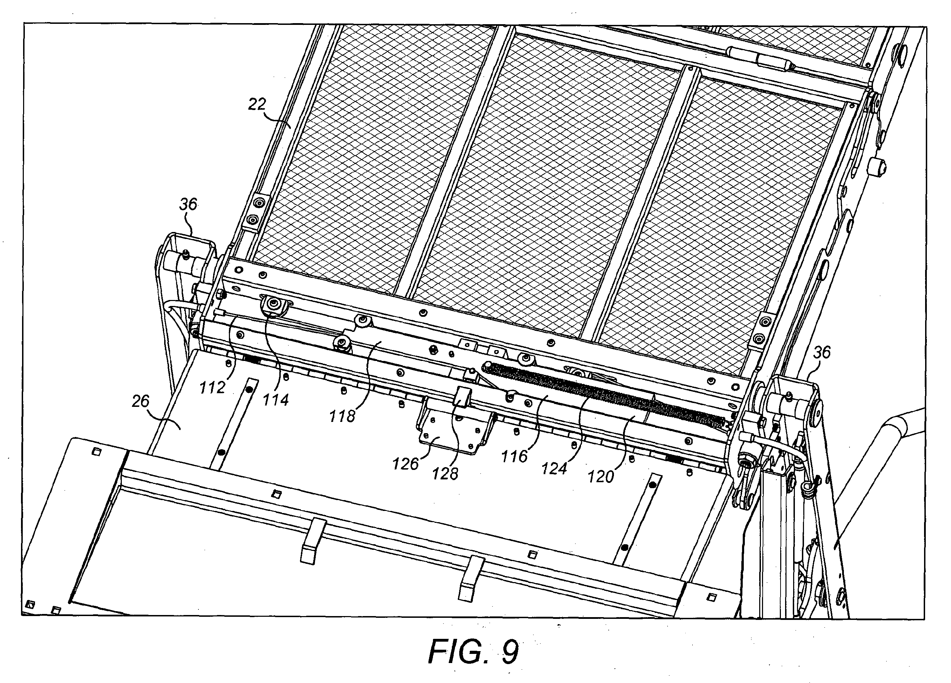

As seen in Figures 8 and 9, a cable 112 has a first end fixed to the upper arm 50 of the fold-actuating assembly 48 on a first side of the lift 10. The cable 112 passes across to the drop arm 36, down through the drop arm 36, out and through the side wall 64 of the proximal platform 22 to the underside of the proximal platform 22. Here, the cable 112 passes beneath the proximal end of the proximal platform 22 in a substantially Z-shaped path around rollers 114, passes through the side wall 64 on the other side of the proximal platform 22, passes up through the drop arm 36 on the second side of the lift and is secured at its second end to the upper arm 50 of the fold-actuating assembly 48 on the second side of the lift.

A slider bar 116 is slidably located on the underside of the proximal platform 22 for movement between the first and second sides of the lift 10. The slider bar 116 comprises a first narrow end 118 and a second wide end 120, with parallel edges in this example, and joined by a sloping surface 122. Spring means, such as a coil spring 124, is connected between the wide end 120 and the side wall 64 on the second side of the proximal platform 22, to bias the slider bar 116 towards the second side. The cable 112 is secured to the slider bar 116 at the narrow end 118 and on the side facing the underside of the platform 22 (and thus not visible in the figures). Thus the cable 112 is operable to pull the slider bar 116 from side to side.

A bracket 126 is fixed to the underside of the bridge plate 26. This is pivotally secured to a knuckle joint 128. The knuckle joint 128 includes a curved portion 130 pivotally connected to a straight portion 132. The straight portion 132 is slidably secured to the underside of the proximal platform 22 for movement in proximal and distal directions, perpendicular to the side-to-side movement of the slider bar 116. A pin 134 is mounted on the straight portion 132 of the knuckle joint 128.

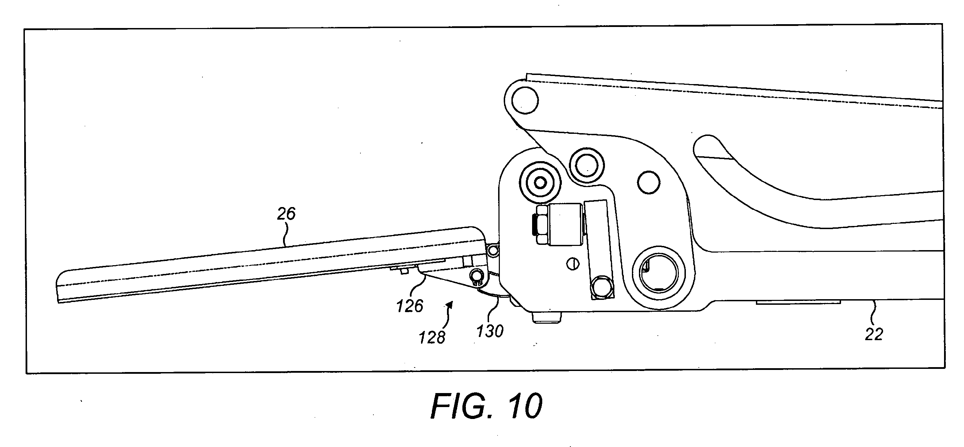

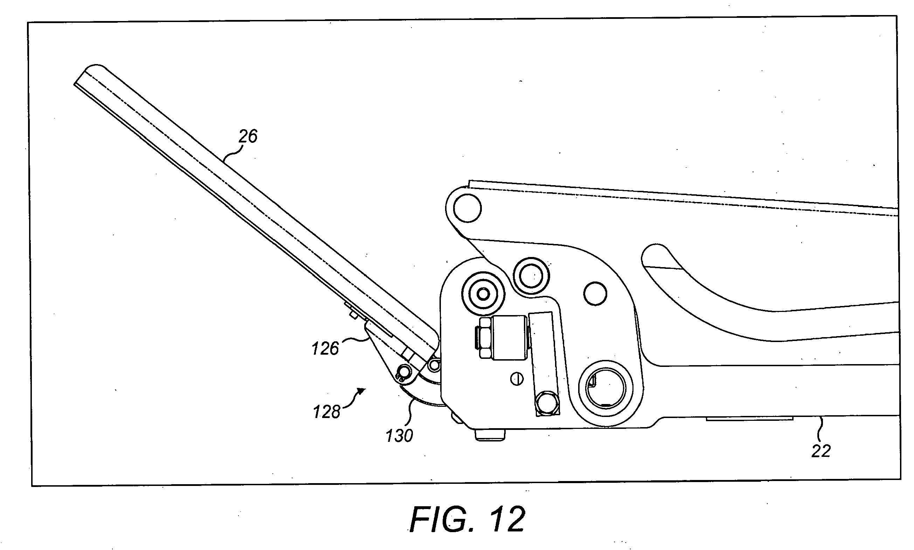

In the stowed position, the spring 124 is contracted and the slider bar 116 is closest to the second side of the proximal platform 22. The pin 134 is adjacent to the narrow end 118 of the slider bar 116. As the lift 10 moves from the stowed position to the loading position, the unfolding movement causes the cable 112 to pull the slider bar 116 towards the first side of the lift 10, against the action of the spring 124. The pin 134 is brought into contact with the sloping surface 122 of the slider bar 116, pushing the pin 134 and portion 132 proximally. The curved configuration of the knuckle joint 128 therefore starts to rotate the bridge plate 26 clockwise as in Figures 10 and 12.

Continued movement of the lift 10 towards the deployed position causes the cable 112 to pull the slider bar 116 further towards the first side of the lift 10. This brings the pin 134 into contact the wide end 120 of the slider bar 116. This pushes the portion 132 of the knuckle joint 128 as far proximally as it can go, bringing the bridge plate 26 into a substantially vertical position, substantially perpendicular to the unfolded platform assembly 14.

When the lift 10 returns from the loading to the stowed position, the reverse actions occur. The cable 112 allows the slider bar 116 to return towards the second side of the lift 10 under the action of the spring 124. The pin 134 can follow the sloping surface 122 of the slider bar 116 back towards the narrow end 120 of the slider bar 116. The portion 132 of knuckle joint 128 slides distally allowing the bridge plate 26 to rotate anti-clockwise back to the substantially horizontal position. The cable 112 and slider bar 116 mechanism provides a positive mechanical lock to hold the bridge plate 26 in position, with anti-burst capability. In other words, the bridge plate cannot be pushed over, for example by a load on the platform assembly 14 rolling against it.

The cable 112 may in fact consist of two cables, one on each side of the lift 10. One end of each cable is secured to the upper arm 50 of the fold-actuating assembly 48 on each side of the lift 10. The other end of each cable is connected to the slider bar 116 at its narrow end 118. In this way, should one cable 112 fail, the mechanism is still able to operate.

It will also be appreciated that the cable and slider mechanism for moving the bridge plate could be used with vehicle lifts having a different type of folding assembly, or with a lift which includes a single platform, rather than proximal and distal platforms 22, 24.

## Claims

1. A lift (10) for attachment to a vehicle, comprising a base (12) assembly mountable to a vehicle, a platform assembly (14) for raising and lowering a load, and a linkage assembly (16) for moving the platform assembly (14) relative to the base assembly (12), wherein the platform assembly (14) comprises a proximal platform (22) closest to the linkage assembly (16) and a distal platform (24) remote from the linkage assembly (16), the proximal and distal platforms (22, 24) are pivotally connected to one another by a hinge at the distal end of the proximal platform (22) and the proximal end of the distal platform (24), and the platform assembly (14) is movable between a folded position in which the proximal and distal platforms (22, 24) are folded about the hinge such that their undersides face one another and an unfolded position in which the proximal and distal platforms (22, 24) are unfolded such that their undersides both face the same direction; and wherein the lift (10) further comprises a fold assembly (68) for moving the platform assembly (14) between the unfolded and folded configurations, comprising a proximal arm (70) slidably mounted to the proximal platform (22), a distal arm (74) secured to the distal platform (24) and an intermediate arm (72) pivotally secured to the proximal and distal arms (70, 74) **characterised in that** the intermediate arm is slidably mounted to the proximal platform (22).

2. A lift (10) as claimed in claim 1, wherein the linkage assembly (16) has a vertical arm (36), the proximal platform (22) and the vertical arm (36) are connected by a shaft (86) permitting rotation of the proximal platform (22) relative to the vertical arm (36) and wherein a connection plate (92) is freely rotatably mounted on the shaft (86) and is pivotally secured to the proximal arm (70) of the fold assembly (68).

3. A lift (10) as claimed in claim 2, wherein the connection plate (92) further comprises a pin (94) rotatably received in a cup (90) on the vertical arm (36) of the link assembly (16).

4. A lift (10) as claimed in claim 3, wherein the cup (90) is defined by a bracket (88) mounted on the vertical arm (36).

5. A lift (10) as claimed in any preceding claim, wherein the proximal arm (70) of the fold assembly (68) defines a first slot (76) and the proximal platform (22) comprises a first pin (78) slidable in the first slot (76).

6. A lift (10) as claimed in any preceding claim, wherein the intermediate arm (72) of the fold assembly (68) defines a second slot (80) and the proximal platform (22) comprises a second pin (82) slidable in the second slot (80).

7. A lift (10) as claimed in any of claims 2-4, further comprising a fold-actuating linkage (48) pivotally connected to the vertical arm (36) of the linkage assembly (16) and to the proximal platform (22), wherein the linkage assembly (16) acts on the fold-actuating linkage (48) to cause rotation of the proximal platform (22) relative to the vertical arm (36).

8. A lift (10) as claimed in claim 7, wherein the fold-actuating linkage (48) further comprises spring means (96), operable to control the rate of movement of the platform assembly (14) as it unfolds, and a hook (98), and the linkage assembly (16) defines an engagement surface (102) spaced from the hook (98), wherein in the event of failure of the spring means (96), the hook (98) and engagement surface (102) come into contact with each other to limit further movement of the platform assembly (14).

## Patentansprüche

1. Aufzug (10) zur Befestigung an einem Fahrzeug, welcher eine an einem Fahrzeug befestigbare Basisanordnung (12), eine Plattform- bzw. Bühnenanordnung (14) zum Anheben und Absenken einer Last, und eine Gestänge- bzw. Anlenkungsanordnung (16) zur Bewegung der Plattform- bzw. Bühnenanordnung (14) relativ zu der Basisanordnung (12) aufweist, wobei die Plattform- bzw. Bühnenanordnung (14) eine proximale Plattform (22), welche der Gestänge- bzw. Anlenkungsanordnung (16) am nächsten ist, sowie eine distale Plattform (24) aufweist, welche sich entfernt von der Gestänge- bzw. Anlenkungsanordnung (16) befindet, wobei die proximale und distale Plattform (22, 24) mit Hilfe eines Scharniers bzw. Gelenks an dem distalen Ende der proximalen Plattform (22) und dem proximalen Ende der distalen Plattform (24) schwenkbar miteinander verbunden sind, und wobei die Plattformanordnung (14) zwischen einer zusammengeklappten Position, in welcher die proximale und distale Plattform (22, 24) an dem Gelenk abgeklappt sind, so dass ihre Unterseiten einander gegenüberliegen, und einer ausgeklappten Position, in der die proximale und distale Plattform (22, 24) ausgeklappt sind, so dass ihre Unterseiten beide in dieselbe Richtung zeigen, bewegbar ist; und wobei der Aufzug (10) des Weiteren eine Klappanordnung (68) zur Bewegung der Plattformanordnung (14) zwischen der ausgekappten und zusammengeklappten Konfiguration aufweist, welche einen proximalen Arm (70), welcher verschiebbar an der proximalen Plattform (22) befestigt ist, einen distalen Arm (74), welcher an der distalen Plattform (24) befestigt ist, und einen Zwischenarm (72) aufweist, welcher an dem proximalen und distalen Arm (70, 74) schwenkbar befestigt ist, **dadurch gekennzeichnet, dass** der Zwischenarm verschiebbar an der proximalen Plattform (22) befestigt ist.

2. Aufzug (10) nach Anspruch 1, wobei die Gestänge- bzw. Anlenkungsanordnung (16) einen vertikalen Arm (36) aufweist, die proximale Plattform (22) und der vertikale Arm (36) über eine Welle (86), welche eine Drehung der proximalen Plattform (22) relativ zu dem vertikalen Arm (36) ermöglicht, verbunden sind, und wobei eine Verbindungsplatte (92) frei drehbar auf der Welle (86) befestigt ist und an dem proximalen Arm (70) der Klappanordnung (68) schwenkbar befestigt ist.

3. Aufzug (10) nach Anspruch 2, wobei die Verbindungsplatte (92) des Weiteren einen Bolzen (94) aufweist, welcher drehbar in einer Aufnahmebuchse (90) auf dem vertikalen Arm (36) der Gestänge- bzw. Anlenkungsanordnung (16) aufgenommen ist.

4. Aufzug (10) nach Anspruch 3, wobei die Aufnahmebuchse (90) durch einen Bügel (88) begrenzt wird, welcher auf dem vertikalen Arm (36) angebracht ist.

5. Aufzug (10) nach einem der vorhergehenden Ansprüche, wobei der proximale Arm (70) der Klappanordnung (68) einen ersten Schlitz (76) begrenzt und die proximale Plattform (22) einen ersten Bolzen (78) aufweist, welcher in dem ersten Schlitz (76) verschiebbar ist.

6. Aufzug (10) nach einem der vorhergehenden Ansprüche, wobei der Zwischenarm (72) der Klappanordnung (68) einen zweiten Schlitz (80) begrenzt, und die proximale Plattform (22) einen zweiten Bolzen (82) aufweist, welcher in dem zweiten Schlitz (80) verschiebbar ist.

7. Aufzug (10) nach einem der Ansprüche 2 bis 4, welcher des Weiteren eine Klapp-Betätigungs-Gestänge (48) aufweist, welches mit dem vertikalen Arm (36) der Gestängebzw. Anlenkungsanordnung (16) und mit der proximalen Plattform (22) schwenkbar verbunden ist, wobei die Gestänge- bzw. Anlenkungsvorrichtung (16) auf das Klapp-Betätigungs-Gestänge (48) einwirkt, um eine Drehung der proximalen Plattform (22) relativ zu dem vertikalen Arm (36) zu erzeugen.

8. Aufzug (10) nach Anspruch 7, wobei das Klapp-Betätigungs-Gestänge (48) des Weiteren eine Federvorrichtung (96) aufweist, welche betriebsbereit ist, um die Bewegungsgeschwindigkeit der Plattformanordnung (14) beim Ausklappen zu steuern, sowie einen Haken (98), und wobei die Gestänge- bzw. Anlenkungsanordnung (16) eine Eingriffsfläche (102) begrenzt, welche von dem Haken (98) beabstandet ist, wobei im Falle eines Versagens der Federvorrichtung (96) der Haken (98) und die Eingriffsfläche (102) in Berührung miteinander gelangen, um eine weitere Bewegung der Plattformanordnung (14) zu begrenzen.

## Revendications

1. Appareil de levage (10) destiné à être fixé à un véhicule, comprenant un ensemble de base (12) pouvant être monté sur un véhicule, un ensemble plate-forme (14) destiné à soulever et à abaisser une charge, et une tringlerie (16) destinée à déplacer l'ensemble plate-forme (14) par rapport à l'ensemble de base (12), dans lequel l'ensemble plate-forme (14) comprend une plate-forme proximale (22) plus proche de la tringlerie (16) et une plate-forme distale (24) éloignée de la tringlerie (16), les plates-formes proximale et distale (22, 24) sont reliées en pivotement l'une à l'autre par une charnière au niveau de l'extrémité distale de la plate-forme proximale (22) et de l'extrémité proximale de la plate-forme distale (24), et l'ensemble plate-forme (14) est mobile entre une position pliée dans laquelle les plates-formes proximale et distale (22, 24) sont pliées autour de la charnière de sorte que leurs faces inférieures soient opposées l'une à l'autre et une position dépliée dans laquelle les plates-formes proximale et distale (22, 24) sont dépliées de sorte que leurs faces inférieures soient orientées toutes deux dans la même direction ; et dans lequel l'appareil de levage (10) comprend en outre un ensemble de pliage (68) pour déplacer l'ensemble plate-forme (14) entre les configurations dépliée et pliée, comprenant un bras proximal (70) monté en coulissement sur la plate-forme proximale (22), un bras distal (74) fixé à la plate-forme distale (24) et un bras intermédiaire (72) fixé en pivotement aux bras proximal et distal (70, 74), **caractérisé en ce que** le bras intermédiaire est monté en coulissement sur la plate-forme proximale (22).

2. Appareil de levage (10) tel que revendiqué dans la revendication 1, dans lequel la tringlerie (16) a un bras vertical (36), la plate-forme proximale (22) et le bras vertical (36) sont reliés par un arbre (86) permettant la rotation de la plate-forme proximale (22) par rapport au bras vertical (36) et dans lequel une plaque de raccordement (92) est montée en rotation libre sur l'arbre (86) et est fixée en pivotement au bras proximal (70) de l'ensemble de pliage (68).

3. Appareil de levage (10) tel que revendiqué dans la revendication 2, dans lequel la plaque de raccordement (92) comprend en outre une broche (94) reçue en rotation dans une coupelle (90) sur le bras vertical (36) de la tringlerie (16).

4. Appareil de levage (10) tel que revendiqué dans la revendication 3, dans lequel la coupelle (90) est définie par un support (88) monté sur le bras vertical (36).

5. Appareil de levage (10) tel que revendiqué dans l'une des revendications précédentes, dans lequel le bras proximal (70) de l'ensemble de pliage (68) définit une première fente (76) et la plate-forme proximale (22) comprend une première broche (78) pouvant coulisser dans la première fente (76).

6. Appareil de levage (10) tel que revendiqué dans l'une des revendications précédentes, dans lequel le bras intermédiaire (72) de l'ensemble de pliage (68) définit une deuxième fente (80) et la plate-forme proximale (22) comprend une deuxième broche (82) pouvant coulisser dans la deuxième fente (80).

7. Appareil de levage (10) tel que revendiqué dans l'une des revendications 2 à 4, comprenant en outre une liaison de commande de pliage (48) reliée en pivotement au bras vertical (36) de la tringlerie (16) et à la plate-forme proximale (22), où la tringlerie (16) agit sur la liaison de commande de pliage (48) pour provoquer la rotation de la plate-forme proximale (22) par rapport au bras vertical (36).

8. Appareil de levage (10) tel que revendiqué dans la revendication 7, dans lequel la liaison de commande de pliage (48) comprend en outre un moyen de ressort (96), pouvant fonctionner pour commander la vitesse de déplacement de l'ensemble plate-forme (14) lorsqu'il se déplie, et un crochet (98), et la tringlerie (16) définit une surface de mise en prise (102) espacée du crochet (98), où dans le cas de défaillance du moyen de ressort (96), le crochet (98) et la surface de mise en prise (102) entrent en contact l'un(e) avec l'autre afin de limiter un déplacement supplémentaire de l'ensemble plate-forme (14).
